# EUROPÄISCHE PATENTSCHRIFT

(11) **EP 1 096 062 B1**
(45) Veröffentlichungstag und Bekanntmachung des Hinweises auf die Patenterteilung: **11.02.2004**
(21) Anmeldenummer: 00121000.4
(22) Anmeldetag: 27.09.2000
(51) Int. Cl.: D21C 5/02, D21C 9/10, D21C 9/16

(54) **Verfahren zur Erhöhung der Homogenität und des Weissgrades von Papierfaserstoff**
Process to improve the homogenity and bleaching degree of paper pulp
Procédé pour améliorer l'homogénéité et le degré de blancheur de pâtes à papier

(30) Priorität: 29.10.1999 DE 19952123; 11.11.1999 DE 19954246
(43) Veröffentlichungstag der Anmeldung: 02.05.2001
(73) Patentinhaber: Voith Paper Patent GmbH, 89522 Heidenheim (DE)
(72) Erfinder: Henssler, Joachim, 88213 Ravensburg (DE); Selder, Harald, 88281 Schlier (DE)

(56) Entgegenhaltungen:
- WO-A-98/04774
- DE-A- 19 614 947
- US-A- 4 177 105

## Beschreibung

Die Erfindung bezieht sich auf ein Verfahren gemäß dem Oberbegriff des Anspruchs 1.

Es ist bekannt, dass durch thermisch-mechanische Dispergierung die Homogenität des Papierfaserstoffes verbessert wird. Bei dieser Behandlung wird durch intensive Faserreibung bei relativ hohen Temperaturen eine Dispergierung von Störstoffen erzielt sowie die Auflösung von eventuell noch vorhandenen Reststippen. Femer ist es bekannt, durch mindestens einen chemischen Bleichprozess den Weißgrad des Papierstoffes zu erhöhen. Eine Kombination dieser beiden genannten Verfahrensschritte zeigt z.B. die DE 196 14 947 A1. Das dort beschriebene Aufbereitungsverfahren wird sowohl mit einer hochwirksamen Dispergierstufe als auch einer chemischen Bleiche durchgeführt, wobei - wie allgemein üblich - die Bleich-Chemikalien in den heißen Stoff unmittelbar vor der Dispergierung zugegeben werden. Mit Hilfe dieses Verfahrens kann der eingesetzte Rohstoff bereits zu einem Faserstoff von hoher Qualität aufbereitet werden.

Aus der WO 98/04774 A ist ein Verfahren bekannt geworden, bei dem unter anderen Alternativen auch die Abkühlung des erhitzten Faserstoffes vor der Bleiche vorgeschlagen wird. Das erfolgt jedoch durch Zugabe von Wasser, also durch Verdünnen des Faserstoffes, was dann wiederum die nachfolgende Bleichwirkung reduziert und ,daher im Allgemeinen unerwünscht ist. Außerdem wären hohe Anforderungen an die Reinheit des an dieser Stelle zugegebenen Wassers zu stellen.

Der Erfindung liegt die Aufgabe zu Grunde, das bekannte Verfahren weiter zu verbessern, insbesondere hinsichtlich Effekt und Wirtschaftlichkeit. Die Chemikalienkosten sollen gesenkt werden.

Diese Aufgabe wird durch die im Kennzeichen des Anspruchs 1 genannten Merkmale gelöst.

Zusätzlich zu den bekannten Vorteilen, die eine intensive thermisch-mechanische Dispergierung des Papierfaserstoffes in Kombination mit einer chemischen Bleiche bringt, führt das erfindungsgemäße Verfahren zu weiteren Verbesserungen. Es kann nämlich nun sichergestellt werden, dass die Bleiche unabhängig von den Erfordernissen der Dispergierung optimal verläuft. Die Dispergierung ist bei sehr hohen Temperaturen durchzuführen, vorzugsweise über 90° C, wobei diese Temperatur durch die übertragene mechanische Dispergerarbeit weiter ansteigt. Es gibt auch Disperger, die mit Überdruck, also 100 bis 130° C, betrieben werden. Sehr hohe Temperaturen bei der chemischen Bleiche sind jedoch kein Vorteil. Es ist bekannt, dass die Bleiche eher schlechtere Ergebnisse hat, wenn die Temperaturen den genannten Dispergierungstemperaturen entsprechen.

Die der Bleiche vorausgehende Heißdispergierung ist geeignet, Enzyme (Katalase) oder Keime im Papierfaserstoff abzutöten, die sonst das Bleichmittel schädigen, also zum Bleichmittelabbau ohne Bleichwirkung führen könnten.

Die der Bleiche vorausgehende Heißdispergierung ist geeignet, Enzyme oder Keime im Papierfaserstoff abzutöten, die sonst das Bleichmittel schädigen, also zur sogenannten Katalase führen könnten.

Die Abkühlung des dispergierten Stoffes auf die zur Bleiche gewünschte Temperatur erfolgt durch Verdampfen des enthaltenen Wassers. In der Regel ist dazu ein Unterdruck (Dampfdruck des Wassers) zweckmäßig. Bei Dispergierungs-Temperaturen über 100° C kann zumindest zunächst Normaldruck ausreichen.

Weitere Ausgestaltungen des Verfahrens können zu einer beträchtlichen Energieeinsparung führen. So läßt sich der bei der Abkühlung des dispergierten Stoffes anfallende Wasserdampf zu Heizzwecken, insbesondere zur Erwärmung des Papierfaserstoffes vor der Dispergierung verwenden. Da bei der Dispergierung ein beträchtlicher Anteil mechanischer Leistung in den Stoff übertragen wird und auch zur Rückführung des abgesaugten Dampfes Verdichterleistung erforderlich ist, kann es sein, dass der thermische Kreislauf des Verfahrens ohne weitere thermische Energiezufuhr auskommt. Das hängt natürlich von den Bedingungen der Dispergierung ab. In anderen Fällen, bei denen also weiterhin Frischdampf zur Aufheizung zugegeben wird, kann dieser Frischdampf mit Vorteil durch eine Dampfstrahlpumpe geführt werden, die die Absaugung des Wasserdampfes bei der Abkühlung vornimmt.

Die Erfindung und ihre Vorteile werden erläutert an Hand von Zeichnungen. Dabei zeigen:
- Fig. 1: ein vereinfachtes Anlagenschema zur Erläuterung des erfindungsgemäßen Verfahrens;
- Fig. 2: eine weitere Variante des Verfahrens;
- Fig. 3: eine Variante der Dampfzugabe zur Stofferhitzung;
- Fig. 4: eine weitere Variante des Verfahrens.

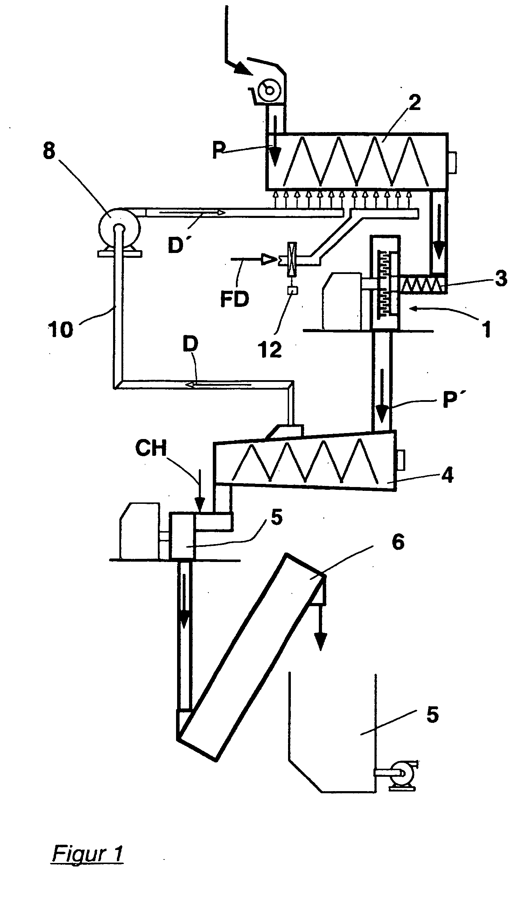

Fig. 1 zeigt schematisch eine Anlage, die zur Durchführung des erfindungsgemäßen Verfahrens verwendet werden kann. Der Papierstoff P, der bereits vorgereinigt, eventuell auch von Druckfarbenpartikeln befreit ist, gelangt als Krümelstoff in hochkonsistenter Form, also mit mehr als 15 % Konsistenz in die Heizvorrichtung 2, die hier als Heizschnecke mit Dampfeinblasung ausgeführt ist. Der Papierstoff wird so auf die gewünschte hohe Temperatur gebracht und dann über eine Zuführschnecke 3 in einen Disperger 1 eingegeben, der eine intensive thermisch- mechanische Behandlung an dem Papierstoff vornimmt. Dabei wird er durch die übertragene Dispergerleistung weiter erhitzt. Der dispergierte Stoff P' fällt nun in einen Stoffkühler 4, in dem er durch eine Schnecke aufgelockert und verwirbelt wird, um das Austreten von Dampf in möglichst kurzer Zeit zu begünstigen. Die Auflockerung kann auch durch ein Wirbelbett erfolgen. Die Verdampfung führt zur gewünschten Abkühlung des Stoffes P'. Außerdem wird die bei der Bleiche störende Luft entfernt. Günstig für die nachfolgende Bleiche ist auch, dass sich durch das Abdampfen die Konsistenz des Stoffes erhöht.

Vorzugsweise stehen das Gehäuseinnere des Dispergers 1, des Stoffkühlers 4 und die Verbindungsleitung dieser beiden Apparate unter einem Druck, der höchstens so groß ist, dass das im Stoff vorhandene Wasser siedet. Hier wird ein Unterdruck dadurch erzeugt, dass ein Verdichter 8 saugseitig über eine Saugleitung 10 mit dem Stoffkühler 4 verbunden ist. Der komprimierte Dampf D' gelangt bei dem hier gezeigten Beispiel zurück in die Heizvorrichtung 2. Die Antriebsleistung des Verdichters geht nicht verloren, sondern trägt nutzbringend zur Erhitzung des Stoffes in der Heizvorrichtung 2 bei. Wenn davon auszugehen ist, dass die Menge des komprimierten Dampfes D' nicht ausreicht, um die notwendige Dispergiertemperatur zu erzielen, wird weiterer Dampf, nämlich Frischdampf FD über eine Regelvorrichtung 12 ebenfalls in die Heizvorrichtung 2 eingespeist, und zwar mit Vorteil im stromabwärtigen Teil.

Es kann auch zweckmäßig sein, den aus dem heißen Stoff austretenden Wasserdampf stufenweise mit in Transportrichtung sinkenden Absolutdrücken abzuziehen. Dadurch läßt sich der Wirkungsgrad verbessem und außerdem kann störende Luft schneller entfernt werden. Der Stoffkühler ist dann in mehrere Kammern zu unterteilen.

Selbstverständlich sind auch andere Möglichkeiten zur Kühlung des dispergierten Stoffes P' auf die Temperatur, die bei der Bleiche eingestellt werden soll, denkbar, z.B. mit Hilfe von Wärmeaustauschern.

Nachdem der dispergierte Stoff P' auf die erforderliche Temperatur abgekühlt wurde, gelangt er in den Mischer 5, in den die an dieser Stelle zuzugebenden Bleich-Chemikalien CH eingemischt werden. Mischer, die sich für hochkonsistenten Papierfaserstoff eignen, sind bekannt. Sie können eine gewisse Knetwirkung haben, die jedoch weit unterhalb eines normal betriebenen Dispergers liegt. In dem sich stromab anschließenden Bleichgefäß 6 findet die eigentliche chemische Bleichreaktion statt. Eventuell kann auch in dieses Bleichgefäß 6 zumindest ein Teil der Bleich- Chemikalien CH eingegeben werden, was sich besonders anbietet, wenn diese gasförmig sind. Nachdem der Stoff mindestens z.B. 10 Minuten im Bleichgefäß 6 verblieben ist, kann er in ein Verdünnungsgefäß 7 herausfallen. Die Bleiche im Bleichgefäß kann unter Normal-, Unter- oder Überdruck betrieben werden.

Wie bereits erwähnt, handelt es sich bei dieser Anlagenbeschreibung lediglich um eine Möglichkeit, das Verfahren auszuführen.

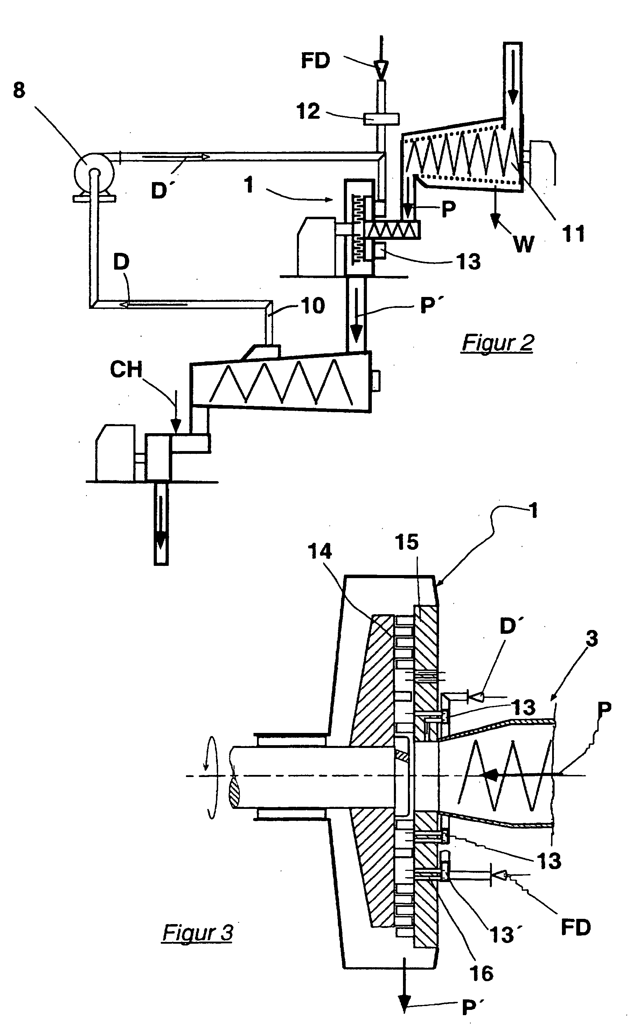

Dem Fachmann sind verschiedene Möglichkeiten bekannt, um aus einem im Wasser suspendierten Papierfaserstoff einen Hochkonsistenzstoff von mindestens 15 % herzustellen. Eine dieser Möglichkeiten, nämlich in Form einer Entwässerungsschneckenpresse 11, ist in der Fig. 2 gezeigt. Aus dieser wird das Wasser W abgepresst, so dass der Papierfaserstoff P, wie bereits beschrieben, in die Dispergeranlage gelangen kann. Auch beim Disperger 1 ist eine Variante dargestellt, nämlich die direkte Zugabe des Wasserdampfes zwischen die Dispergergarnituren über einen Zugabering 13 am Deckel des Dispergers 1. Mit dieser Variante läßt sich die Aufheizung des Papierfaserstoffes einfacher und sehr viel schneller durchführen. Dabei wird der aus dem Stoffkühler 4 abgesaugte und im Verdichter 8 komprimierte Wasserdampf D' eingespeist, eventuell unter Zumischung von Frischdampf FD.

Fig. 3 zeigt als Variante der bei Fig. 2 bereits beschriebenen Dampfzugabe direkt zwischen die Dispergerganituren 14 und 15 im Detail. Bei einer solchen Vorgehensweise wird genutzt, dass der Stoff dort bereits sehr fein aufgeteilt ist und daher schnell vom Dampf penetriert wird. Die für den Dispergiereffekt wichtigste Zone liegt im radial äußeren Bereich, wo der Stoff also schon erhitzt ist. Hier wird auch eine Möglichkeit gezeigt, die unterschiedlichen Dampfqualitäten spezifisch in den Stoff einzuleiten. Der - weniger heiße - komprimierte Dampf D' gelangt an die weiter stromaufwärtige Stelle der Dispergergarnitur, was von Vorteil ist wegen des dort noch geringeren Stoff-Temperaturniveaus. Er wird über den Zugabering 13 durch die in den Garniturzwischenraum führende Leitungen 16 dem Stoff direkt zugeführt. Der - heißere - Frischdampf FD gelangt dagegen in den nur teilweise gezeichneten äußeren Zugabering 13', von dem er in den Garniturzwischenraum weitergeleitet wird.

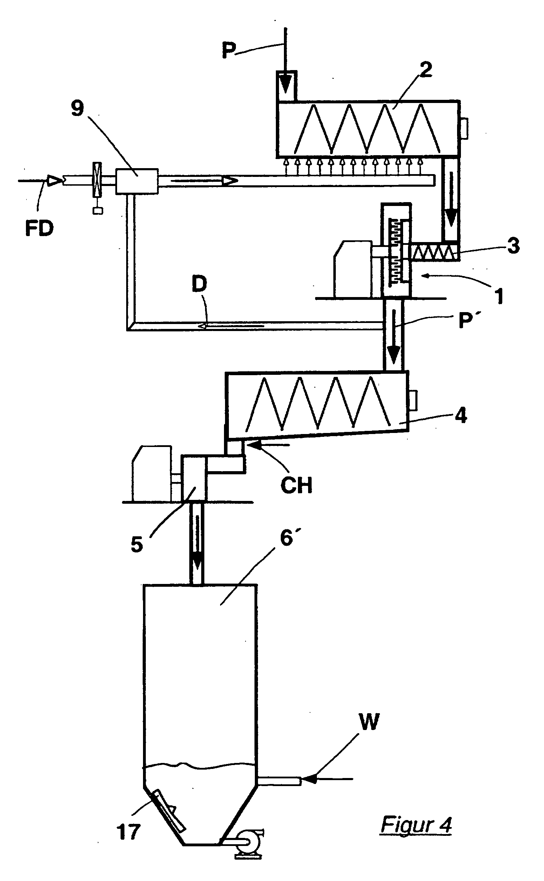

Bei dem Beispiel in Fig. 4 wird aus dem Stoffkühler 4 der Wasserdampf D mit Hilfe einer Dampfstrahlpumpe 9 abgesaugt. Diese wird mit Frischdampf FD betrieben. Das so erzeugte Gemisch beider Dämpfe gelangt wiederum in die Heizvorrichtung 2. Als weitere Variante ist hier das Bleichgefäß 6' als Dickstoffturm ausgebildet, in dem der Stoff unten durch Wasserzugabe bis zur Pumpfähigkeit verdünnt wird, wobei ein Laufrad 17 für den benötigten Umtrieb sorgt.

## Patentansprüche

1. Verfahren zur Erhöhung der Homogenität und des Weißgrades von zumindest teilweise aus Altpapier gewonnenem Papierfaserstoff (P)
unter Anwendung einer thermisch-mechanischen Dispergierung des Papierfaserstoffes bei einer spezifischen Arbeit von mindestens 20 kWh/to, einer Stoffdichte über 15 % und einer Stofftemperatur über 80° C sowie
unter Anwendung einer chemischen Bleiche des Papierfaserstoffes, vor der der thermisch-mechanisch dispergierte Stoff (P') abgekühlt wird
**dadurch gekennzeichnet,**
**dass** bei der chemischen Bleiche eine Temperatur eingestellt wird, die mindestens 10° C unter der maximal auftretenden Dispergierungstemperatur liegt und dass die Abkühlung durch Absaugen des aus dem dispergierten Stoff (P') austretenden Wasserdampfes erfolgt.

2. Verfahren nach Anspruch 1,
**dadurch gekennzeichnet,**
**dass** die Bleiche bei einer Temperatur unter 80° C durchgeführt wird.

3. Verfahren nach Anspruch 2,
**dadurch gekennzeichnet,**
**dass** die Bleiche bei einer Temperatur zwischen 50° und 70° C durchgeführt wird.

4. Verfahren nach Anspruch 1, 2 oder 3,
**dadurch gekennzeichnet,**
**dass** bei der thermisch-mechanischen Dispergierung eine spezifische Arbeit von mindestens 60 kWh/to übertragen wird.

5. Verfahren nach Anspruch 1, 2, 3 oder 4,
**dadurch gekennzeichnet,**
**dass** für die Bleiche oxidierende Bleich-Chemikalien (CH) verwendet werden.

6. Verfahren nach Anspruch 5,
**dadurch gekennzeichnet,**
**dass** die Bleich-Chemikalien (CH) Wasserstoff-Peroxid enthalten.

7. Verfahren nach einem der voranstehenden Ansprüche,
**dadurch gekennzeichnet,**
**dass** durch das Absaugen ein Druck erzeugt wird, der etwa dem Dampfdruck des dispergierten Stoffes (P') bei der zur Bleiche gewünschten Temperatur entspricht.

8. Verfahren nach einem der voranstehenden Ansprüche,
**dadurch gekennzeichnet,**
**dass** das Absaugen des Dampfes in mehreren nacheinanderfolgenden Stufen mit fallendem Absolutdruck erfolgt.

9. Verfahren nach einem der voranstehenden Ansprüche,
**dadurch gekennzeichnet,**
**dass** der Stoff (P) beim Absaugen des Dampfes verwirbelt wird.

10. Verfahren nach einem der voranstehenden Ansprüche,
**dadurch gekennzeichnet,**
**dass** der abgesaugte Wasserdampf (D) zu Heizzwecken verwendet wird.

11. Verfahren nach Anspruch 10,
**dadurch gekennzeichnet,**
**dass** der Wasserdampf (D) komprimiert und dann als komprimierter Wasserdampf (D') zur Aufheizung des Papierfaserstoffes (P) vor der thermisch-mechanischen Dispergierung eingesetzt wird.

12. Verfahren nach Anspruch 11,
**dadurch gekennzeichnet,**
**dass** die Komprimierung in einem Verdichter (8) erfolgt.

13. Verfahren nach Anspruch 11 oder 12,
**dadurch gekennzeichnet,**
**dass** die Aufheizung des Papierfaserstoffs (P) in einer Heizvorrichtung (2) mit direkter Dampfzugabe durchgeführt wird und dass der komprimierte Wasserdampf (D') in diese Heizvorrichtung (2) eingespeist wird.

14. Verfahren nach einem der voranstehenden Ansprüche,
**dadurch gekennzeichnet,**
**dass** die Aufheizung des Papierfaserstoffs (P) in einer Heizvorrichtung (2) mit direkter Dampfzugabe durchgeführt wird und dass der bei der Abkühlung des dispergierten Stoffes (P') ausgetretene Wasserdampf (D) von einer mit Frischdampf (FD) betriebenen Dampfstrahlpumpe (9) abgesaugt und mit diesem Frischdampf (FD) zusammen in die Heizvorrichtung (2) eingespeist wird.

15. Verfahren nach Anspruch 13 oder 14,
**dadurch gekennzeichnet,**
**dass** die Heizvorrichtung (2) etwa bei Umgebungsdruck betrieben wird.

## Claims

1. A method for increasing the homogeneity and the whiteness of paper stock (P) obtained at least partially from waste paper
using thermo-mechanical dispersion of the paper stock at a specific work of at least 20 kWh/to, a stock density of over 15% and a stock temperature of over 80°C and
using a chemical bleaching of the paper stock, before which the thermomechanically dispersed stock (P') is cooled,
**characterised in that**
during the chemical bleaching a temperature is set which is at least 10°C below the maximum dispersion temperature which occurs and that the cooling is effected by extracting the steam emerging from the dispersed stock (P').

2. A method according to Claim 1,
**characterised in that**
the bleaching is carried out at a temperature below 80°C.

3. A method according to Claim 2,
**characterised in that**
the bleaching is carried out at a temperature between 50° and 70°C.

4. A method according to Claim 1, 2 or 3,
**characterised in that**
a specific work of at least 60 kWh/to is transmitted upon the thermo-mechanical dispersion.

5. A method according to Claim 1, 2, 3 or 4,
**characterised in that**
oxidising bleaching chemicals (CH) are used for the bleaching.

6. A method according to Claim 5,
**characterised in that**
the bleaching chemicals (CH) contain hydrogen peroxide.

7. A method according to one of the preceding claims,
**characterised in that**
the extraction produces a pressure which corresponds approximately to the vapour pressure of the dispersed raw material (P') at the temperature desired for bleaching.

8. A method according to one of the preceding claims,
**characterised in that**
the extraction of the steam takes place in a plurality of successive stages with falling absolute pressure.

9. A method according to one of the preceding claims,
**characterised in that**
the stock (P) is swirled as the vapour is extracted.

10. A method according to one of the preceding claims,
**characterised in that**
the extracted steam (D) is used for heating purposes.

11. A method according to Claim 10,
**characterised in that**
the steam (D) is compressed and then is used as compressed steam (D') for heating up the paper stock (P) before the thermo-mechanical dispersion.

12. A method according to Claim 11,
**characterised in that**
the compression takes place in a compressor (8).

13. A method according to Claim 11 or 12,
**characterised in that**
the heating of the paper stock (P) is carried out in a heating device (2) with direct addition of steam and that the compressed steam (D') is fed into this heating device (2).

14. A method according to one of the preceding claims,
**characterised in that**
the heating of the paper stock (P) is carried out in a heating device (2) with direct addition of steam and that the steam (D) emerging upon the cooling of the dispersed stock (P') is extracted by a steam injector (9) operated with live steam (FD) and is fed together with this live steam (FD) into the heating device (2).

15. A method according to Claim 13 or 14,
**characterised in that**
the heating device (2) is operated at approximately ambient pressure.

## Revendications

1. Procédé destiné à l'augmentation de l'homogénéité et du degré de blanc de matière fibreuse de papier (P) obtenue, au moins partiellement, à partir de vieux papiers, au moyen d'une dispersion thermo-mécanique de la matière fibreuse de papier à une énergie spécifique d'au moins 20 kWh/to, une densité de matière supérieure à 15 % et une température de matière supérieure à 80 °C, ainsi qu'au moyen d'un blanchiment chimique de la matière fibreuse de papier avant lequel la matière (P') dispersée par voie thermo-mécanique est refroidie, **caractérisé en ce que,**
lors du blanchiment chimique, on établit une température qui est inférieure d'au moins 10 °C à la température maximale de dispersion, et **en ce que** le refroidissement est effectué par aspiration de la vapeur d'eau sortant de la matière (P') dispersée.

2. Procédé selon la revendication 1, **caractérisé en ce que**
le blanchiment est effectué à une température inférieure à 80 °C.

3. Procédé selon la revendication 2, **caractérisé en ce que**
le blanchiment est effectué à une température comprise entre 50 ° et 70 °C.

4. Procédé selon la revendication 1, 2 ou 3, **caractérisé en ce que**
une énergie spécifique d'au moins 60 kWh/to est transmise lors de la dispersion thermo-mécanique.

5. Procédé selon la revendication 1, 2, 3 ou 4, **caractérisé en ce que**
des produits chimiques de blanchiment (CH) oxydants sont utilisés pour le blanchiment.

6. Procédé selon la revendication 5, **caractérisé en ce que**
les produits chimiques de blanchiment (CH) contiennent du peroxyde d'hydrogène.

7. Procédé selon l'une quelconque des revendications précédentes, **caractérisé en ce que**
une pression est engendrée par l'aspiration, qui correspond approximativement à la pression de la vapeur de la matière (P') dispersée à la température souhaitée pour le blanchiment.

8. Procédé selon l'une quelconque des revendications précédentes, **caractérisé en ce que**
l'aspiration de la vapeur est effectuée en plusieurs paliers successifs à pression absolue se réduisant.

9. Procédé selon l'une quelconque des revendications précédentes, **caractérisé en ce que**
la matière (P) est mise en turbulence lors de l'aspiration de la vapeur.

10. Procédé selon l'une quelconque des revendications précédentes, **caractérisé en ce que**
la vapeur d'eau (D) aspirée est utilisée à des fins de chauffage.

11. Procédé selon la revendication 10, **caractérisé en ce que**
la vapeur d'eau (D) est comprimée, et est ensuite utilisée en tant que vapeur d'eau comprimée (D') pour le chauffage de la matière fibreuse de papier (P) avant la dispersion thermo-mécanique.

12. Procédé selon la revendication 11, **caractérisé en ce que**
la compression est effectuée dans un compresseur (8).

13. Procédé selon la revendication 11 ou 12, **caractérisé en ce que**
le chauffage de la matière fibreuse de papier (P) est effectué dans un dispositif de chauffage (2) avec ajout direct de vapeur, et **en ce que** la vapeur d'eau comprimée (D') est injectée dans ce dispositif de chauffage (2).

14. Procédé selon l'une quelconque des revendications précédentes, **caractérisé en ce que**
le chauffage de la matière fibreuse de papier (P) est effectué dans un dispositif de chauffage (2) avec ajout direct de vapeur, et **en ce que** la vapeur d'eau (D) libérée lors du refroidissement de la matière (P') dispersée est aspirée par une pompe (9) à jet de vapeur fonctionnant avec de la vapeur vive (FD), et est injectée avec cette vapeur vive (FD) dans le dispositif de chauffage (2).

15. Procédé selon la revendication 13 ou 14, **caractérisé en ce que**
le dispositif de chauffage (2) fonctionne sensiblement à pression ambiante.
